# EUROPEAN PATENT SPECIFICATION

(11) **EP 2 103 871 B1**
(45) Date of publication and mention of the grant of the patent: **02.11.2011**
(21) Application number: 09154839.6
(22) Date of filing: 11.03.2009
(51) Int. Cl.: F21V 19/00, F21S 8/10, F21Y 101/02, F21W 101/14

(54) **Illumination device, in particular for motor vehicle lights**
Beleuchtungsvorrichtung, insbesondere für Kraftfahrzeugleuchten
Dispositif d'éclairage, en particulier pour les phares de véhicule à moteur

(30) Priority: 18.03.2008 IT TO20080206
(43) Date of publication of application: 23.09.2009
(73) Proprietor: Tyco Electronics AMP Italia S.r.l., 10093 Collegno (Torino) (IT)
(72) Inventor: Genta, Alessandro, 10093 Alpignano (Torino) (IT); Briccarello, Alessandro, 10141 Torino (IT)
(74) Representative: Notaro, Giancarlo

(56) References cited:
- EP-A1- 1 867 912
- DE-U1- 20 314 664
- US-A- 5 490 049
- US-A1- 2005 237 760
- US-B1- 6 406 173

## Description

The present invention relates to an illumination device, in particular for motor vehicle lights, as known from the nearest prior art document DE 203 14 664 U1.

Further, another LED illumination device of this type is known, for example, from US 6406173 B1.

In recent years it has become increasingly common to use LED sources in order to produce rear or front motor vehicle lights. When first applied, this use was limited to lights having a relatively simple shape and geometry, for which it was possible to arrange a group of LEDs on a single flat printed circuit which also acted as a support. However, more recently it has become necessary to apply the illumination technology using LED groups to lights having more complex shapes and extending three-dimensionally in any direction.

In applications of this type, there is the problem of ensuring precise relative positioning between each LED and the relative optical element which collimates the light beam, the optical characteristics of the light otherwise being lost.

If the geometry of the shape is complex, it is thus difficult to arrange the preliminary assembly of the LEDs on a common support, since when the transparent element including the optical elements to be connected to the LEDs is fitted on said support, precise relative positioning between each LED and the respective optical element is not ensured, unless extremely limited tolerances are adopted when constructing the support, which would considerably increase production costs.

The main object of the present invention is to provide an LED illumination device of the type mentioned at the outset of the present description which is of simple and economical construction and, in particular, is easy and quick to assemble and which also ensures that each LED is precisely positioned relative to the optical element connected thereto.

With a view to achieving this object, the invention relates to an illumination device of the aforementioned type according to the technical features of claim 1.

Since there is some play between the LED-holder elements and the respective seats in the support, the LEDs may be pre-assembled on the support outside the production line, even if the support is made with fairly liberal manufacturing tolerances, since when the transparent element is fixed to the support the coupling of the LEDs to the respective optical elements ensures that said LEDs are centred and correctly positioned. Production time and costs are thus drastically reduced without reducing the optical qualities of the light.

In a preferred embodiment of the invention, the support is made of plastics material and comprises a plurality of seats each able to receive therein an LED-holder element. Furthermore, each LED-holder element comprises a plastics material body having a front portion able to receive at least one LED and a rear portion defining a cavity for receiving therein an electrical connector, to which a plurality of electrical conductors which supply power to the LED-holder element is connected. In this case, owing to the shape of the LED-holder element, simple wiring is ensured which makes it possible to correctly supply power to the LEDs.

Even in the specific case of the aforementioned preferred embodiment, the front portion of the LED-holder element comprises two moulded tabs which project from the plastics material body and define a mouth able to receive and retain the LED. Furthermore, each optical element of the transparent element comprises a rear portion which has a seat shaped so as to complement the shape of said mouth formed in the front portion of the LED-holder element, said seat enabling a positive connection in such a way that the LED is correctly centred relative to the optical element when the transparent element is fixed to said support. Lastly, said seat is tapered so as to centre said LED-holder element relative to said optical element once the transparent element has been coupled to the support.

As already mentioned, since the LED-holder elements are floating in the seats formed on the support and owing to the shape of the coupling and centring means, the LEDs are perfectly centred relative to the corresponding optical elements by simply fixing the transparent element to the support.

Other features and advantages of the present invention will become clear from the following description which is given with reference to the appended drawings which are provided purely by way of non-limiting example and in which:
- Fig. 1 is a perspective view of an illumination device according to an embodiment of the invention, in which the transparent element is not fixed to the support;
- Fig. 2 is an enlarged view, partly in section, of the illumination device of Fig. 1, in which the transparent element is fixed to the support;
- Fig. 3 is an enlarged detail of Fig. 2;
- Fig. 4 is a sectional view taken along a plane orthogonal to the plane shown in Fig. 3;
- A, B and C in Fig. 5 are three perspective views of a portion of the support, an LED-holder element and an electrical connector respectively;
- Fig. 6 is a perspective view which shows the elements of Fig. 5 coupled to one another;
- Fig. 7 is a perspective view of an LED-holder element; and
- Fig. 8 is a perspective exploded view showing the assembly phase of the LED and the electrical contacts on the LED-holder element.

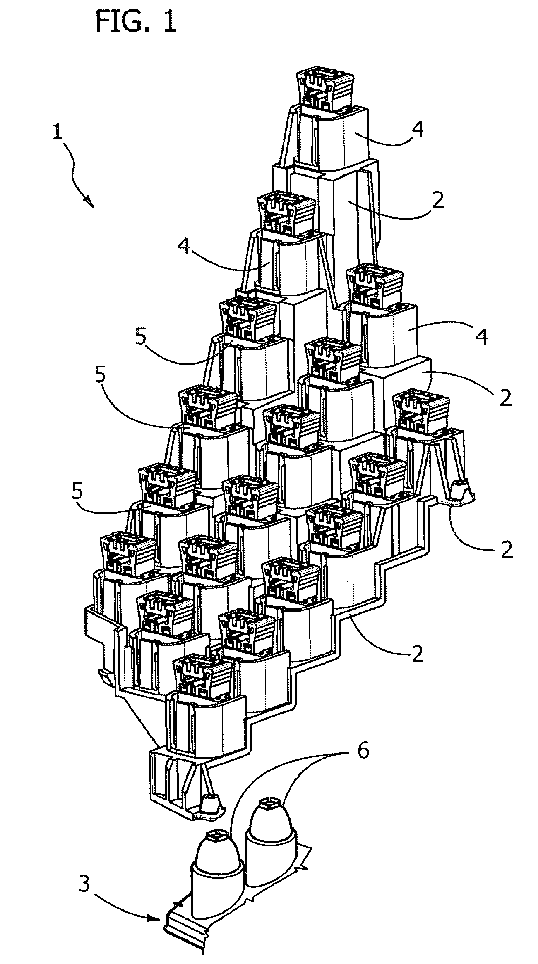

With reference to Fig. 1, reference numeral 1 denotes the entire illumination device, in particular a portion or sub-group of a rear motor vehicle optical group. A rear motor vehicle optical group typically comprises more portions or sub-groups having various optical functions, for example a portion which acts as a sidelight, a portion which acts as a brake light, a portion which acts as an indicator light or a rear fog light or a reverse light. Any of these portions may be formed, according to the invention, by the structure shown in the drawings. The device 1 comprises a support 2 having a complex shape, extending three-dimensionally and defining a stepped surface with more rows of "platforms" arranged side by side and in a stepped manner. The support 2 is made of plastics material and comprises a plurality of casings projecting orthogonally from each "platform" and each defining a seat 4. Each seat 4 is able to receive therein an LED-holder element indicated as a whole by reference numeral 5. A transparent element 3, which can be seen in part in Figs. 1 to 4 and is also made of plastics material, is fixed to the support 2, for example by means of screws (not shown), on which transparent element a plurality of optical elements 6 is defined. The transparent element 3 is fixed to the support 2 once the LED-holder elements 5 have been assembled thereon, in such a way that a respective optical element for collimating the light beam emitted by the LED is connected to each LED.

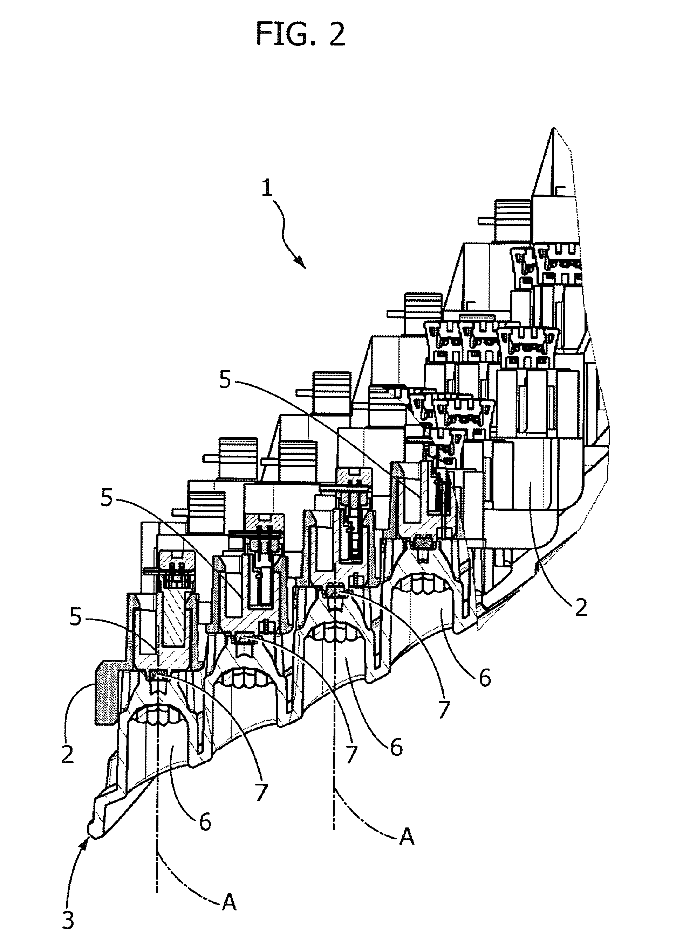

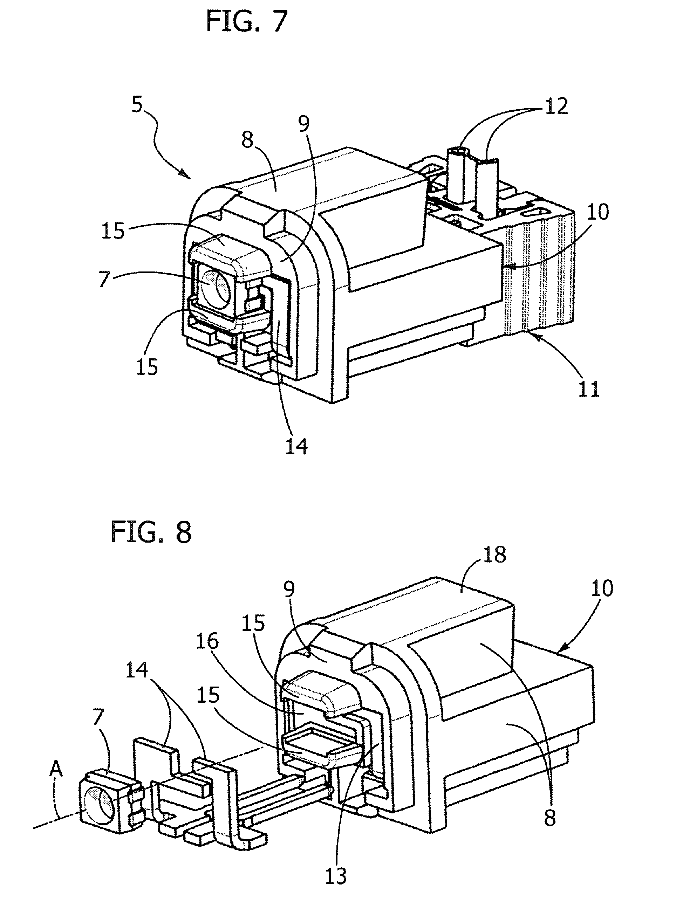

With reference in particular to Figs. 2 to 4 and 7 to 8, each LED-holder element 5 comprises a plastics material body 8 having a front portion 9 which is shaped so as to receive and to hold an LED 7. For this purpose, two moulded tabs 15 are defined on the front portion 9 which project from the body 8 of the LED-holder element 5. The two tabs 15 define a mouth 16 (see Fig. 8) able to receive and hold therein the LED 7. In the case of the example shown, the two moulded tabs 15 have a C-shaped cross-section in a plane orthogonal to the optical axis A.

In the example shown, each LED-holder element 5 holds a single LED 7, but embodiments in which a small sub-group of LEDs 7, for example 3 or 4 LEDs, is mounted on each individual LED-holder element 5 are not excluded *a priori.*

The reference A denotes the optical emission axis of each LED, orthogonal to the surface on which the LED is supported.

In Fig. 8, seats 13 formed in the front portion 9 of the body 8 of the LED-holder element 5 can be seen which are able to receive and hold in position electrical contacts 14 which are to be connected to the LED 7 with the relative power supply, as will be described in detail below. The electrical contacts 14 are preferably formed by cutting and folding one or more sheet metal elements and each comprise a front portion which extends substantially in the plane of a front wall of the body 8 and is received inside the corresponding seat 13, and a rear portion orthogonal to said plane in such a way that it is received through a respective opening formed in the aforementioned front wall and extends through an inner cavity in the body 8 arranged behind said front wall.

The rear portions of the contacts 14 connected to each element 5 are connected to the power supply by means of an electrical connector 11 which is removably received inside said cavity in the body 8 which leads into the rear face of the body 8, denoted by reference numeral 10.

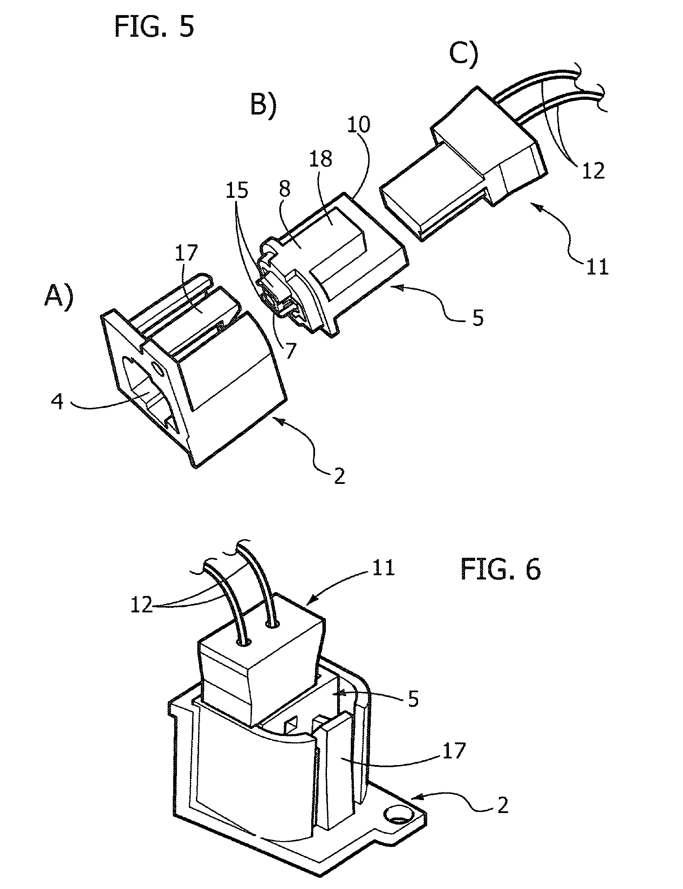

The electrical connector 11 is connected to a plurality of electrical conductors 12 (Figs. 5 to 7) which supply power to the contacts 14 connected to the LED-holder element 5. Consequently, the LED-holder element 5 and the connector 11 ensure the electrical connection between the LED 7 and the power supply in a simple and efficient manner.

With reference to Figs. 5 and 6, each LED-holder element 5 is coupled to a respective seat 4 in the respective casing forming part of the plastics material support 2 via releasable coupling means, which comprise a retaining tongue 17 (see Fig. 5A) press-formed in the wall of the casing and a projection 18 formed on the central portion of the body 8 in the vicinity of the rear portion 10 of the LED-holder element 5.

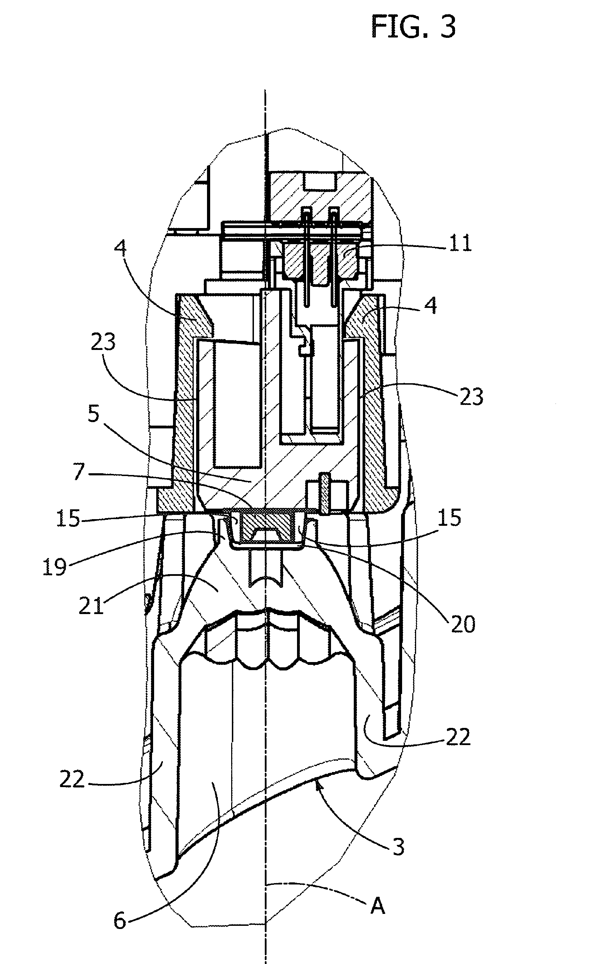

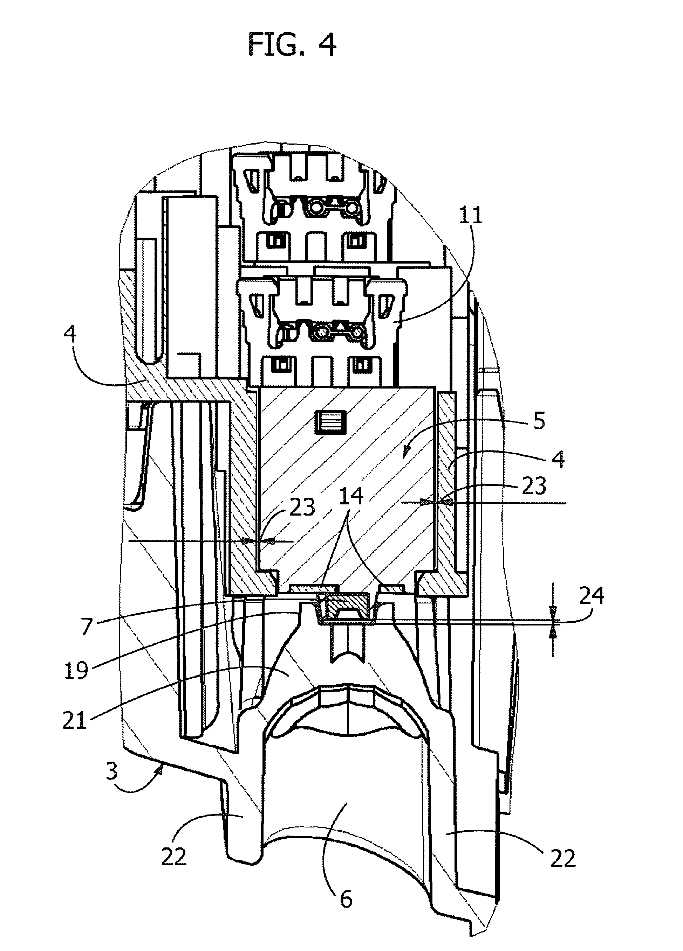

With reference to Figs. 3 and 4, each optical element 6 formed on the transparent element 3 comprises a rear portion 19 which defines a seat 20 shaped so as to complement the shape of the mouth 16 formed in the front portion 9 of the LED-holder element 5.

The seat 20 defined in the rear portion 19 of the optical element 6 enables a positive connection with the moulded tabs 15 formed on the front portion 9 of the LED-holder element 5. This positive connection ensures that the LED 7 is centred correctly relative to the corresponding connected optical element 6 when the transparent element 3 is fixed to the support 2.

Again with reference to Figs. 3 and 4, the seat 20 defined in the rear portion 19 of the optical element 6 is tapered so as to facilitate coupling between the transparent element 3 and the support 2[e1].

In the case of the example shown, the moulded tabs 15 projecting from the body 8 of the LED-holder element 5 are also tapered. This facilitates centring when the transparent element 3 is coupled to the support 2.

Again with reference to Figs. 3 and 4, the optical element 6 also has a substantially paraboloid central region 21 which is able to shape and focus the light beam emitted from the LED 7 in a direction substantially parallel to the optical axis A of the LED 7. Lastly, the optical element 6 has a substantially tubular front portion 22 which guides the light beam towards the exterior of the[e2] illumination device 1.

Figs. 3 and 4 also show the play, indicated with reference numeral 23, which exists between each LED-holder element 5 and the respective seat 4 formed in the support 2, both in the horizontal direction of Fig. 3 and in the horizontal direction of Fig. 4. This play 23 thus enables the LED-holder element 5 to move slightly in two directions which are orthogonal to one another and transversely to the optical axis A of the LED 7. Furthermore, play 24 (see Fig. 4) also preferably exists which enables the LED-holder element 5 to move slightly in the direction of the optical axis A, relative to the seat 4 of the support 2.

The term "move slightly" in the present description and in the claims which follow means movement which is typically no greater than some tenths of a millimetre and, at any rate, movement to an extent which is sufficient to ensure the possibility that each LED 7 is centred relative to the corresponding optical element 6 following the mutual coupling thereof.

It is obvious from the above description that the illumination device according to the invention has advantages, both from the point of view of reducing manufacturing costs, above all with regard to producing the plastics material support 2 which does not necessarily have to be made with extremely strict tolerances, and from the point of view of simple and easy assembly owing to the possibility of preassembling all the LEDs on the support 2 before fixing the optical element 6 and also owing to the simple manner in which the LEDs are wired, which is achieved by using the connectors 11. The provision of relative play between the elements 5 and seats 4 and the presence of coupling and centring means ensure that each LED is positioned correctly relative to the corresponding optical element when the support 2 with the LEDs 7 pre-assembled thereon is connected to the transparent element 3.

In conclusion, the possibility of arranging the LED-holder elements so as to float in at least two directions inside the seats formed in the plastics material support is exploited so as to obtain a correct positioning of the LEDs relative to the optical elements.

Obviously, the teaching upon which the present invention is based may be applied to one or more portions of a single optical group.

In a preferred embodiment, each of the portions which forms the optical group is defined by a different support whilst a single transparent element is present, to which the various supports of the portions forming the group are fixed.

## Claims

1. Illumination device (1), in particular for a motor vehicle light, comprising:
- a plurality of LEDs (7), each having an optical axis (A),
- a support (2) on which said plurality of LEDs (7) is mounted,
- a transparent element (3) fixed to the support (2) and defining a plurality of optical elements (6) each associated with a respective LED (7),
- the LEDs (7) being held by respective LED-holder elements (5) which are mounted on said support (2),
- the LEDs (7) are held, individually or in sub-groups, by said LED-holder elements (5),
- each LED-holder element (5) and the optical element (6), or optical elements, connected thereto have coupling and centring means (15, 16, 19, 20) which correctly position each LED (7) relative to the optical element (6) connected thereto when the transparent element (3) is fixed to said support (2) **characterised in that**:
- said LED-holder elements (5) are mounted on said support (2) so as to each be free to move slightly at least in two directions orthogonal to one another, transversely to or along the optical axis (A) of the LEDs (7).

2. Illumination device according to claim 1, **characterised in that** said support (2) is made of plastics material and comprises a plurality of seats (4) each able to receive therein an LED-holder element (5).

3. Illumination device according to claim 2, **characterised in that** each LED-holder element (5) is coupled to a respective seat (4) of the plastics material support (2) via releasable coupling means (17, 18).

4. Illumination device according to either claim 2 or claim 3, **characterised in that** each LED-holder element (5) is received in the respective seat (4) of the support (2) with play (24, 23) both in the direction of said optical axis (A) and in two directions orthogonal to one another and perpendicular to the optical axis (A).

5. Illumination device according to any one of the preceding claims, **characterised in that** each LED-holder element (5) comprises a plastics material body (8) having a front portion (9) able to receive at least one LED (7) of said plurality, and a rear portion (10) defining a cavity for receiving therein an electrical connector (11), to which a plurality of electrical conductors (12) which supply power to the LED-holder element (5) is connected.

6. Illumination device according to claim 5, **characterised in that** said front portion (9) of the LED-holder element (5) is shaped so as to receive and hold in position a plurality of electrical contacts (14) which are in turn shaped so as to be electrically connected to said electrical connector (11) so as to supply power to said LED (7).

7. Illumination device according to claim 6, **characterised in that** each of said electrical contacts (14) is formed by cutting and folding a sheet metal element.

8. Illumination device according to either claim 6 or claim 7, **characterised in that** said front portion (9) of the LED-holder element (5) comprises at least two moulded tabs (15) which project from the plastics material body (8) and define a mouth (16) able to receive and retain said LED (7).

9. Illumination device according to claim 8, **characterised in that** each optical element (6) of the transparent element (3) comprises a rear portion (19) which has a seat (20) shaped so as to complement the shape of said mouth (16) formed in the front portion (9) of the LED-holder element (5), said seat (20) enabling a positive connection in such a way that the LED (7) is correctly centred relative to the optical element (6) when the transparent element (3) is fixed to said support (2).

10. Illumination device according to claim 9, **characterised in that** at least said seat (20) is tapered so as to centre said LED-holder element (5) relative to said optical element (6) following said coupling.

11. Illumination device according to either claim 9 or claim 10, **characterised in that** each optical element (6) also has a substantially paraboloid central portion (21) which is able to shape and focus the light beam emitted from the LED (7) in a direction substantially parallel to the axis (A) of the LED, and a substantially tubular front portion (22) which guides the light beam outwardly.

12. Illumination device according to any one of the preceding claims, **characterised in that** the shape of said plastics material support (2) expands three-dimensionally[e4].

13. Rear motor vehicle optical group comprising a plurality of optical portions having different illumination functions, **characterised in that** each of said portions is formed by a device (1) according to any one of the preceding claims.

14. Rear motor vehicle optical group according to claim 13, **characterised in that** each of said portions has a respective support (2) defining the seats (4) for the LED-holder elements (5), said group comprising a single transparent element (3) to which the supports of the various portions are fixed.

## Patentansprüche

1. Beleuchtungsvorrichtung (1), insbesondere für eine Fahrzeugleuchte, wobei die Vorrichtung Folgendes umfasst:
mehrere LEDs (7), die jede eine optische Achse (A) haben,
einen Träger (2), auf dem die mehreren LEDs (7) angebracht sind,
ein transparentes Element (3), das an dem Träger (2) befestigt ist und mehrere optische Elemente (6) definiert, die jedes mit einer jeweiligen LED (7) verknüpft sind,
wobei die LEDs (7) durch jeweilige LED-Halterelemente (5) gehalten werden, die an dem Träger (2) angebracht sind,
wobei die LEDs (7), einzeln oder in Untergruppen, durch die LED-Halterelemente (5) gehalten werden,
wobei jedes LED-Halterelement (5) und das optische Element (6) oder die optischen Elemente, die mit demselben verbunden sind, Kopplungs- und Zentrierungsmittel (15, 16, 19, 20) haben, die jede LED (7) im Verhältnis zu dem mit derselben verbundenen optischen Element (6) richtig anordnen, wenn das transparente Element (3) an dem Träger (2) befestigt wird,
**dadurch gekennzeichnet, dass**:
die LED-Halterelemente (5) so an dem Träger (2) angebracht sind, dass sie sich frei geringfügig wenigstens in zwei senkrecht zueinander stehenden Richtungen, quer zu oder längs der optischen Achse (A) der LEDs (7), bewegen können.

2. Beleuchtungsvorrichtung nach Anspruch 1, **dadurch gekennzeichnet, dass** der Träger (2) aus einem Kunststoffmaterial hergestellt ist und mehrere Sitze (4) umfasst, die jeder dazu in der Lage sind, in demselben ein LED-Halterelement (5) aufzunehmen.

3. Beleuchtungsvorrichtung nach Anspruch 2, **dadurch gekennzeichnet, dass** jedes LED-Halterelement (5) über lösbare Kopplungsmittel (17, 18) an einen jeweiligen Sitz (4) des Kunststoffmaterial-Trägers (2) gekoppelt ist.

4. Beleuchtungsvorrichtung nach Anspruch 2 oder Anspruch 3, **dadurch gekennzeichnet, dass** jedes LED-Halterelement (5) mit Spiel (24, 23) sowohl in der Richtung der optischen Achse (A) als auch in zwei Richtungen, die senkrecht zueinander und senkrecht zu der optischen Achse (A) stehen, in dem jeweiligen Sitz des Trägers (2) aufgenommen wird.

5. Beleuchtungsvorrichtung nach einem der vorhergehenden Ansprüche, **dadurch gekennzeichnet, dass** jedes LED-Halterelement (5) einen Kunststoffmaterial-Korpus (8) umfasst, der einen vorderen Abschnitt (9), der dazu in der Lage ist, wenigstens eine LED (7) von den mehreren aufzunehmen, und einen hinteren Abschnitt (10), der einen Hohlraum definiert, um in demselben einen elektrischen Steckverbinder (11) aufzunehmen, hat, mit dem mehrere elektrische Leiter (12), die dem LED-Halterelement (5) Strom zuführen, verbunden sind.

6. Beleuchtungsvorrichtung nach Anspruch 5, **dadurch gekennzeichnet, dass** der vordere Abschnitt (9) des LED-Halterelementes (5) so geformt ist, dass er mehrere elektrische Kontakte (14) aufnimmt und festhält, die wiederum so geformt sind, dass sie elektrisch mit dem elektrischen Steckverbinder (11) verbunden sind, um so der LED (7) Strom zuzuführen.

7. Beleuchtungsvorrichtung nach Anspruch 6, **dadurch gekennzeichnet, dass** jeder der elektrischen Kontakte (14) geformt ist durch das Schneiden und Falten eines Blechelementes.

8. Beleuchtungsvorrichtung nach Anspruch 6 oder Anspruch 7, **dadurch gekennzeichnet, dass** der vordere Abschnitt (9) des LED-Halterelementes (5) wenigstens zwei geformte Laschen (15) umfasst, die von dem Kunststoffmaterial-Korpus (8) aus vorspringen und eine Öffnung (16) definieren, die dazu in der Lage ist, die LED (7) aufzunehmen und zurückzuhalten.

9. Beleuchtungsvorrichtung nach Anspruch 8, **dadurch gekennzeichnet, dass** jedes optische Element (6) des transparenten Elements (3) einen hinteren Abschnitt (19) umfasst, der einen Sitz (20) hat, der so geformt ist, dass er die Form der in dem vorderen Abschnitt (9) des LED-Halterelementes (5) geformten Öffnung (16) ergänzt, wobei der Sitz (20) auf eine solche Weise eine formschlüssige Verbindung ermöglicht, dass die LED (7) im Verhältnis zu dem optischen Element (6) richtig zentriert wird, wenn das transparente Element (3) an dem Träger (2) befestigt wird.

10. Beleuchtungsvorrichtung nach Anspruch 9, **dadurch gekennzeichnet, dass** der wenigstens eine Sitz (20) verjüngt ist, um so das LED-Halterelement (5) anschließend an das Koppeln im Verhältnis zu dem optischen Element (6) zu zentrieren.

11. Beleuchtungsvorrichtung nach Anspruch 9 oder Anspruch 10, **dadurch gekennzeichnet, dass** jedes optische Element (6) ebenfalls einen im Wesentlichen paraboloidförmigen mittigen Abschnitt (21), der dazu in der Lage ist, den von der LED (7) ausgesendeten Lichtstrahl in einer Richtung, im Wesentlichen parallel zu der optischen Achse (A) der LED, zu bilden und zu bündeln, und einen im Wesentlichen röhrenförmigen vorderen Abschnitt (22), der den Lichtstrahl nach außen leitet, hat.

12. Beleuchtungsvorrichtung nach einem der vorhergehenden Ansprüche, **dadurch gekennzeichnet, dass** sich die Form des Kunststoffmaterial-Trägers (2) dreidimensional erweitert (e4).

13. Hintere Kraftfahrzeug-Optikgruppe, die mehrere optische Abschnitte umfasst, die unterschiedliche Beleuchtungsfunktionen haben, **dadurch gekennzeichnet, dass** jeder der Abschnitte durch eine Vorrichtung (1) nach einem der vorhergehenden Ansprüche gebildet wird.

14. Hintere Kraftfahrzeug-Optikgruppe nach Anspruch 13, **dadurch gekennzeichnet, dass** jeder der Abschnitte einen jeweiligen Träger (2) hat, der die Sitze (4) für die LED-Halterelemente (5) definiert, wobei die Gruppe ein einziges transparentes Element (3) umfasst, an dem die Träger der verschiedenen Abschnitte befestigt sind.

## Revendications

1. Dispositif d'éclairage (1), en particulier pour un feu d'un véhicule à moteur, comprenant :
plusieurs DEL (diodes électroluminescentes) (7), comportant chacune un axe optique (A) ;
un support (2) sur lequel sont montées lesdites plusieurs DEL (7) ;
un élément transparent (3), fixé sur le support (2) et définissant plusieurs éléments optiques (6), associés chacun à une DEL respective (7) ;
les DEL (7) étant retenues par des éléments de retenue des DEL respectifs (5), montés sur ledit support (2) ;
les DEL (7) étant retenues, individuellement ou en sous-groupes, par lesdits éléments de retenue des DEL (5) ;
**caractérisé en ce** chaque élément de retenue d'une DEL (5) et l'élément optique (6) ou les éléments optiques qui y sont connectés, comportent des moyens d'accouplement et de centrage (15, 16, 19, 20) assurant le positionnement correct de chaque DEL (7) par rapport à l'élément optique (6) qui y est connecté lorsque l'élément transparent (3) est fixé sur ledit support (2),
**caractérisé en ce que**
lesdits éléments de retenue des DEL (5) étant montés sur ledit support (2) de sorte que chacun puisse se déplacer légèrement, au moins dans deux directions orthogonales l'une à l'autre, transversalement par rapport à l'axe optique (A) des DEL (7) ou le long de celui-ci.

2. Dispositif d'éclairage selon la revendication 1, **caractérisé en ce que** ledit support (2) est composé d'un matériau plastique et comprend plusieurs sièges (4), chacun étant capable de recevoir un élément de retenue d'une DEL (5) dans celui-ci.

3. Dispositif d'éclairage selon la revendication 2, **caractérisé en ce que** chaque élément de retenue d'une DEL (5) est accouplé à un siège respectif (4) du support en matériau plastique (2) par l'intermédiaire d'un moyen d'accouplement à dégagement (17, 18).

4. Dispositif d'éclairage selon les revendications 2 ou 3, **caractérisé en ce que** chaque élément de retenue d'une DEL (5) est reçu dans le siège respectif (4) du support (2) avec un jeu (24, 23), tant dans la direction dudit axe optique (A) que dans deux directions orthogonales l'une à l'autre et perpendiculaires à l'axe optique (A).

5. Dispositif d'éclairage selon l'une quelconque des revendications précédentes, **caractérisé en ce que** chaque élément de retenue d'une DEL (5) comprend un corps en matériau plastique (8), comportant une partie avant (9) capable de recevoir au moins une DEL (7) desdites plusieurs DEL, et une partie arrière (10), définissant une cavité pour recevoir un connecteur électrique (11), auquel sont connectés plusieurs conducteurs électriques (12) alimentant en énergie l'élément de retenue d'une DEL (5).

6. Dispositif d'éclairage selon la revendication 5, **caractérisé en ce que** ladite partie avant (9) de l'élément de retenue de la DEL (5) est formée de sorte à recevoir et à retenir dans leur position plusieurs contacts électriques (14), formés à leur tour de sorte à être connectés électriquement audit connecteur électrique (11) pour alimenter en énergie ladite DEL (7).

7. Dispositif d'éclairage selon la revendication 6, **caractérisé en ce que** chacun desdits contacts électriques (14) est formé en coupant et en pliant un élément de tôle.

8. Dispositif d'éclairage selon les revendications 6 ou 7, **caractérisé en ce que** ladite partie avant (9) de l'élément de retenue de la DEL (5) comprend au moins deux pattes moulées (15), débordant du corps en matériau plastique (8), et définissant une embouchure (16) capable de recevoir et de retenir ladite DEL (7).

9. Dispositif d'éclairage selon la revendication 8, **caractérisé en ce que** chaque élément optique (6) de l'élément transparent (3) comprend une partie arrière (19), comportant un siège (20) formé de sorte à être complémentaire de la forme de ladite embouchure (16) formée dans la partie avant (9) de l'élément de retenue de la DEL (5), ledit siège (20) permettant une connexion positive, de sorte que la DEL (7) est centrée de manière correcte par rapport à l'élément optique (6) lorsque l'élément transparent (3) est fixé sur ledit support (2).

10. Dispositif d'éclairage selon la revendication 9, **caractérisé en ce qu'**au moins ledit siège (20) est effilé, de sorte à centrer ledit élément de retenue de la DEL (5) par rapport audit élément optique (6) après ledit accouplement.

11. Dispositif d'éclairage selon les revendications 9 ou 10, **caractérisé en ce que** chaque élément optique (6) comporte en outre une partie centrale pratiquement paraboloïde (21), capable de former et de focaliser le faisceau de lumière émis par la DEL (7) dans une direction pratiquement parallèle à l'axe (A) de la DEL, et une partie avant pratiquement tubulaire (22), guidant le faisceau de lumière vers l'extérieur.

12. Dispositif d'éclairage selon l'une quelconque des revendications précédentes, **caractérisé en ce que** la forme dudit support en matériau plastique (2) est dilatée de manière tridimensionnelle (e4).

13. Groupe optique arrière d'un véhicule à moteur, comprenant plusieurs parties optiques assurant différentes fonctions d'éclairage, **caractérisé en ce que** chacune desdites parties est formée par un dispositif (1) selon l'une quelconque des revendications précédentes.

14. Groupe optique arrière d'un véhicule à moteur selon la revendication 13, **caractérisé en ce que** chacune desdites parties comporte un support respectif (2), définissant les sièges (4) pour les éléments de retenue des DEL (5), ledit groupe comprenant un seul élément transparent (3) sur lequel sont fixés les supports des différentes parties.
